# EUROPEAN PATENT APPLICATION

(11) **EP 4 325 929 A1**
(43) Date of publication of application: **21.02.2024**
(21) Application number: 22803539.0
(22) Date of filing: 07.01.2022
(51) Int. Cl.: H04W 28/08

(54) **WIRELESS COMMUNICATION METHOD, COMMUNICATION APPARATUS AND COMMUNICATION SYSTEM**

(30) Priority: 18.05.2021 CN 202110540884
(71) Applicant: Huawei Technologies Co., Ltd., Shenzhen, Guangdong 518129 (CN)
(72) Inventor: ZHOU, Han, Shenzhen, Guangdong 518129 (CN); LI, Hancheng, Shenzhen, Guangdong 518129 (CN)
(74) Representative: Gill Jennings & Every LLP
(86) International application number: PCT/CN2022/070738
(87) International publication number: WO 2022/242201

(57) **Abstract**

This application provides a wireless communication method, a communication apparatus, and a communication system. The method includes: When downlink data flows of a plurality of applications arrive at a radio access network device at a same time point or at similar time points, but the radio access network device does not have sufficient resources to schedule the plurality of downlink data flows simultaneously, the radio access network device may redetermine, based on a load capability, a time point at which a downlink data flow of an application arrives at the radio access network device, to enable downlink data flows of different applications not to arrive at the radio access network device within a concentrated time range. This reduces load pressure of the radio access network device and avoids a case in which the radio access network device cannot normally send service data flows. Therefore, the communication system can efficiently transmit the downlink data flows of the plurality of applications.

## Description

### CROSS-REFERENCE TO RELATED APPLICATIONS

This application claims priority to Chinese Patent Application No. 202110540884.X, filed with the China National Intellectual Property Administration on May 18, 2021 and entitled "WIRELESS COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a wireless communication method, a communication apparatus, and a communication system.

### BACKGROUND

In a network architecture in which a communication system, for example, a 5th generation (the 5th generation, 5G) system, interworks with a time sensitive network (time sensitive network, TSN), the communication system and a TSN translator (TSN Translator) are used as a logical TSN switching node as a whole.

The communication system may transmit data flows of a plurality of applications simultaneously. In this scenario, how to efficiently transmit the data flows of the plurality of applications needs to be resolved currently.

### SUMMARY

Embodiments of this application provide a wireless communication method, a communication apparatus, and a communication system, so that the communication system efficiently transmits data flows of a plurality of applications.

According to a first aspect, an embodiment of this application provides a wireless communication method. The method may be performed by a radio access network device or a module used in the radio access network device. The method includes: obtaining a first time point at which a downlink data flow of a first application arrives at the radio access network device and a second time point at which a downlink data flow of a second application arrives at the radio access network device; and when the first time point and the second time point meet a first condition, determining, based on a load capability of the radio access network device, a third time point at which the downlink data flow of the first application arrives at the radio access network device, where the third time point is an adjusted time point at which the downlink data flow of the first application arrives at the radio access network device.

According to the foregoing solution, when downlink data flows of a plurality of applications arrive at the radio access network device at a same time point or at similar time points, but the radio access network device does not have sufficient resources to schedule the plurality of downlink data flows simultaneously, the radio access network device may redetermine, based on the load capability, a time point at which a downlink data flow of an application arrives at the radio access network device, to enable the downlink data flows of different applications not to arrive at the radio access network device within a concentrated time range. This reduces load pressure of the radio access network device and avoids a case in which the radio access network device cannot normally send service data flows. Therefore, a communication system can efficiently transmit the downlink data flows of the plurality of applications.

In a possible implementation, when an interval between the first time point and the second time point is less than a first threshold, the third time point at which the downlink data flow of the first application arrives at the radio access network device is determined based on the load capability of the radio access network device, where an interval between the third time point and the second time point is greater than or equal to the first threshold.

In a possible implementation, the third time point is sent to a session management network element.

In a possible implementation, the load capability includes one or more of a central processing unit capability, an air interface spectrum resource, an air interface bandwidth resource, and a memory size.

According to a second aspect, an embodiment of this application provides a wireless communication method. The method may be performed by a first network element or a module used in the first network element. The method includes: receiving, from a radio access network device, a third time point at which a downlink data flow of a first application arrives at the radio access network device; and determining, based on the third time point, a sending time window of the downlink data flow of the first application at an egress port of a communication system, where an ingress port of the communication system corresponds to a terminal, and the egress port corresponds to a terminal.

According to the foregoing solution, when sending time windows of downlink data flows of different applications at the egress port of the communication system overlap, a sending time window of a downlink data flow of one or more of the applications at the egress port may be adjusted, to enable the sending time windows of the downlink data flows of the different applications at the egress port not to overlap. This avoids a scheduling conflict between the downlink data flows of the different applications at the egress port. Therefore, the communication system can efficiently transmit downlink data flows of a plurality of applications.

In a possible implementation, the first network element is a session management network element, and the sending time window is sent to a policy control network element or a network exposure network element.

In a possible implementation, the first network element is a session management network element, a network exposure network element, or a policy control network element; a time point at which the downlink data flow of the first application arrives at the ingress port of the communication system is determined based on the sending time window and an internal processing delay of the communication system; and the time point at which the downlink data flow of the first application arrives at the ingress port of the communication system is sent to an application function network element.

In a possible implementation, the first network element is a network exposure network element or a policy control network element, and the time point at which the downlink data flow of the first application arrives at the ingress port of the communication system is sent to a session management network element.

In a possible implementation, the sending time window is sent to the egress port.

According to a third aspect, an embodiment of this application provides a wireless communication method. The method may be performed by a radio access network device or a module used in the radio access network device. The method includes: obtaining a first time point at which a terminal sends an uplink data flow of a first application to the radio access network device and a second time point at which the terminal sends an uplink data flow of a second application to the radio access network device; and when the first time point and the second time point meet a first condition, determining, based on a load capability of the radio access network device, a third time point at which the terminal sends the uplink data flow of the first application to the radio access network device, where the third time point is an adjusted time point at which the uplink data flow of the first application arrives at the radio access network device.

According to the foregoing solution, when the terminal sends data flows of a plurality of applications to the radio access network device at a same time point or at similar time points, uplink data flows of the plurality of applications arrive at the radio access network device at a same time point or at similar time points. The radio access network device does not have sufficient resources to schedule the plurality of uplink data flows simultaneously, and the radio access network device may redetermine, based on the load capability, a time point at which the terminal sends an uplink data flow of an application to the radio access network device, to enable the uplink data flows of different applications not to arrive at the radio access network device within a concentrated time range. This reduces load pressure of the radio access network device and avoids a case in which the radio access network device cannot normally send service data flows. Therefore, a communication system can efficiently transmit the uplink data flows of the plurality of applications.

In a possible implementation, when an interval between the first time point and the second time point is less than a first threshold, the third time point at which the terminal sends the uplink data flow of the first application to the radio access network device is determined based on the load capability of the radio access network device, where an interval between the third time point and the second time point is greater than or equal to the first threshold.

In a possible implementation, the third time point is sent to a session management network element.

In a possible implementation, the load capability includes one or more of a central processing unit capability, an air interface spectrum resource, an air interface bandwidth resource, and a memory size.

According to a fourth aspect, an embodiment of this application provides a wireless communication method. The method may be performed by a first network element or a module used in the first network element. The method includes: receiving, from a radio access network device, a third time point at which a terminal sends an uplink data flow of a first application to the radio access network device; and determining, based on the third time point, a sending time window of the uplink data flow of the first application at an egress port of a communication system, where an ingress port of the communication system corresponds to the terminal, and the egress port corresponds to a user plane network element.

According to the foregoing solution, when sending time windows of uplink data flows of different applications at the egress port of the communication system overlap, a sending time window of an uplink data flow of one or more of the applications at the egress port may be adjusted, to enable the sending time windows of the uplink data flows of the different applications at the egress port not to overlap. This avoids a scheduling conflict between the uplink data flows of the different applications at the egress port. Therefore, the communication system can efficiently transmit uplink data flows of a plurality of applications.

In a possible implementation, the first network element is a session management network element, and the sending time window is sent to a policy control network element or a network exposure network element.

In a possible implementation, the first network element is a session management network element, a network exposure network element, or a policy control network element; a time point at which the uplink data flow of the first application arrives at the ingress port of the communication system is determined based on the sending time window and an internal processing delay of the communication system; and the time point at which the uplink data flow of the first application arrives at the ingress port of the communication system is sent to an application function network element.

In a possible implementation, the first network element is a session management network element; and after determining a time point at which the uplink data flow of the first application arrives at the ingress port of the communication system, the session management network element sends a downlink non-access stratum message to the terminal, where the downlink non-access stratum message includes the time point at which the uplink data flow of the first application arrives at the ingress port of the communication system.

In a possible implementation, the first network element is a network exposure network element or a policy control network element; and after determining a time point at which the uplink data flow of the first application arrives at the ingress port of the communication system, the network exposure network element or the policy control network element sends, to a session management network element, the time point at which the uplink data flow of the first application arrives at the ingress port of the communication system. Optionally, after receiving the time point at which the uplink data flow of the first application arrives at the ingress port of the communication system, the session management network element sends a downlink non-access stratum message to the terminal, where the downlink non-access stratum message includes the time point at which the uplink data flow of the first application arrives at the ingress port of the communication system.

In a possible implementation, the first network element is a network exposure network element or a policy control network element, and the sending time window is sent to the egress port.

According to a fifth aspect, an embodiment of this application provides a wireless communication method. The method may be performed by a first network element or a module used in the first network element. The method includes: receiving, from a radio access network device, a third time point at which a downlink data flow of a first application arrives at the radio access network device; and determining, based on the third time point, a time point at which the downlink data flow of the first application arrives at an ingress port of a communication system, where the ingress port corresponds to a user plane network element, and an egress port of the communication system corresponds to a terminal.

In a possible implementation, the first network element is a session management network element, and the time point at which the downlink data flow of the first application arrives at the ingress port of the communication system is sent to a policy control network element or a network exposure network element.

In a possible implementation, the first network element is a network exposure network element or a policy control network element, and the time point at which the downlink data flow of the first application arrives at the ingress port of the communication system is sent to an application function network element and/or a session management network element.

According to a sixth aspect, an embodiment of this application provides a wireless communication method. The method may be performed by a first network element or a module used in the first network element. The method includes: receiving, from a radio access network device, a third time point at which a terminal sends an uplink data flow of a first application to the radio access network device; and determining, based on the third time point, a time point at which the uplink data flow of the first application arrives at an ingress port of a communication system, where the ingress port corresponds to the terminal, and an egress port of the communication system corresponds a user plane network element.

In a possible implementation, the first network element is a session management network element, a network exposure network element, or a policy control network element, and the time point at which the uplink data flow of the first application arrives at the ingress port of the communication system is sent to an application function network element.

In a possible implementation, the first network element is a session management network element; and after determining the time point at which the uplink data flow of the first application arrives at the ingress port of the communication system, the session management network element sends a downlink non-access stratum message to the terminal, where the downlink non-access stratum message includes the time point at which the uplink data flow of the first application arrives at the ingress port of the communication system.

In a possible implementation, the first network element is a network exposure network element or a policy control network element; and after determining the time point at which the uplink data flow of the first application arrives at the ingress port of the communication system, the network exposure network element or the policy control network element sends, to a session management network element, the time point at which the uplink data flow of the first application arrives at the ingress port of the communication system. Optionally, after receiving the time point at which the uplink data flow of the first application arrives at the ingress port of the communication system, the session management network element sends a downlink non-access stratum message to the terminal, where the downlink non-access stratum message includes the time point at which the uplink data flow of the first application arrives at the ingress port of the communication system.

According to a seventh aspect, an embodiment of this application provides a wireless communication method. The method may be performed by a policy control network element, a network exposure network element, a module used in the policy control network element, or a module used in the network exposure network element. The method includes: determining a first sending time window of a data flow of a first application at an egress port of a communication system and a second sending time window of a data flow of a second application at the egress port, where the egress port corresponds to a terminal or a user plane network element; and determining a third sending time window of the data flow of the first application at the egress port when the first sending time window overlaps the second sending time window, where the third sending time window is an adjusted sending time window of the data flow of the first application at the egress port, and the third sending time window does not overlap the second sending time window.

According to the foregoing solution, when sending time windows of different applications at the egress port of the communication system overlap, a sending time window of one or more of the applications may be redetermined, to enable the sending time windows of the different applications not to overlap. This avoids a scheduling conflict between data flows of the different applications on the terminal or the user plane network element. Therefore, the communication system can efficiently transmit data flows of a plurality of applications.

In a possible implementation, the third sending time window is sent to an application function network element.

In a possible implementation, a time point at which the data flow of the first application arrives at an ingress port of the communication system is determined based on the third sending time window and an internal processing delay of the communication system, and the time point at which the data flow of the first application arrives at the ingress port of the communication system is sent to the application function network element. The egress port corresponds to the terminal, and the ingress port corresponds to the user plane network element; or the egress port corresponds to the user plane network element, and the ingress port corresponds to the terminal.

In a possible implementation, a first parameter from the application function network element is received, where the first parameter carries the time point at which the data flow of the first application arrives at the ingress port of the communication system.

In a possible implementation, the third sending time window is sent to the egress port.

According to an eighth aspect, an embodiment of this application provides a communication apparatus. The apparatus may be a radio access network device, or may be a chip used in the radio access network device. The apparatus has a function of implementing any implementation of the first aspect or the third aspect. The function may be implemented by hardware, or may be implemented by hardware executing corresponding software. The hardware or the software includes one or more modules corresponding to the function.

According to a ninth aspect, an embodiment of this application provides a communication apparatus. The apparatus may be a first network element, or may be a chip used in the first network element. The apparatus has a function of implementing any implementation of the second aspect, the fourth aspect, the fifth aspect, or the sixth aspect. The function may be implemented by hardware, or may be implemented by hardware executing corresponding software. The hardware or the software includes one or more modules corresponding to the function.

According to a tenth aspect, an embodiment of this application provides a communication apparatus. The apparatus may be a policy control network element or a network exposure network element, or may be a chip used in the policy control network element or the network exposure network element. The apparatus has a function of implementing any implementation of the seventh aspect. The function may be implemented by hardware, or may be implemented by hardware executing corresponding software. The hardware or the software includes one or more modules corresponding to the function.

According to an eleventh aspect, an embodiment of this application provides a communication apparatus, including a processor and a memory. The memory is configured to store computer instructions; and when the apparatus runs, the processor executes the computer instructions stored in the memory, to enable the apparatus to perform any implementation of the first aspect to the seventh aspect.

According to a twelfth aspect, an embodiment of this application provides a communication apparatus, including units or means (means) configured to perform steps of any implementation of the first aspect to the seventh aspect.

According to a thirteenth aspect, an embodiment of this application provides a communication apparatus, including a processor and an interface circuit. The processor is configured to communicate with another apparatus through the interface circuit, and perform any implementation of the first aspect to the seventh aspect. There are one or more processors.

According to a fourteenth aspect, an embodiment of this application provides a communication apparatus, including a processor coupled to a memory. The processor is configured to invoke a program stored in the memory, to perform any implementation of the first aspect to the seventh aspect. The memory may be located inside or outside the apparatus. There may be one or more processors.

According to a fifteenth aspect, an embodiment of this application further provides a computer-readable storage medium. The computer-readable storage medium stores instructions, and when the instructions are run on a communication apparatus, any implementation in the first aspect to the seventh aspect is performed.

According to a sixteenth aspect, an embodiment of this application further provides a computer program product. The computer program product includes a computer program or instructions, and when the computer program or the instructions are run by a communication apparatus, any implementation of the first aspect to the seventh aspect is performed.

According to a seventeenth aspect, an embodiment of this application further provides a chip system, including a processor, configured to perform any implementation of the first aspect to the seventh aspect.

According to an eighteenth aspect, an embodiment of this application further provides a communication system. The communication system includes a radio access network device configured to perform any implementation of the first aspect and a first network element configured to perform any implementation of the second aspect.

According to a nineteenth aspect, an embodiment of this application further provides a communication system. The communication system includes a radio access network device configured to perform any implementation of the third aspect and a first network element configured to perform any implementation of the fourth aspect.

According to a twentieth aspect, an embodiment of this application further provides a communication system. The communication system includes a radio access network device configured to perform any implementation of the first aspect and a first network element configured to perform any implementation of the fifth aspect.

According to a twenty-first aspect, an embodiment of this application further provides a communication system. The communication system includes a radio access network device configured to perform any implementation of the third aspect and a first network element configured to perform any implementation of the sixth aspect.

### BRIEF DESCRIPTION OF DRAWINGS

FIG. 1(a) is a schematic diagram of a 5G network architecture based on a service-based architecture;
FIG. 1(b) is a schematic diagram of a 5G network architecture based on a point-to-point interface;
FIG. 2 is a schematic diagram of a fully centralized TSN system architecture;
FIG. 3 is a schematic diagram of a system architecture in which a 5G system interworks with a TSN;
FIG. 4 is a simplified schematic diagram of a system architecture in which a 5G system interworks with a TSN;
FIG. 5 is a schematic diagram of a wireless communication method according to an embodiment of this application;
FIG. 6(a) is a schematic diagram of a wireless communication method according to an embodiment of this application;
FIG. 6(b) is a schematic diagram of a wireless communication method according to an embodiment of this application;
FIG. 7 is a schematic diagram of a communication apparatus according to an embodiment of this application; and
FIG. 8 is a schematic diagram of a communication apparatus according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment.

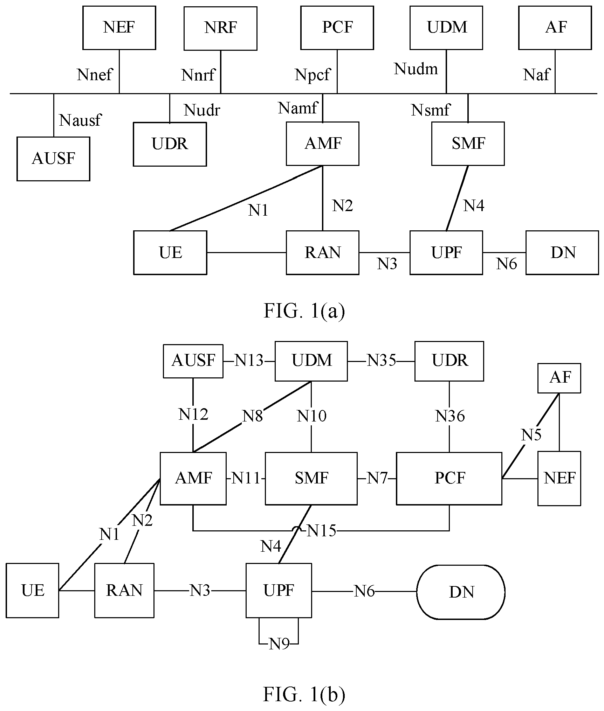

FIG. 1(a) is a schematic diagram of a 5G network architecture based on a service-based architecture. The 5G network architecture shown in FIG. 1(a) may include three parts: a terminal, a data network (data network, DN), and an operator network. The following briefly describes functions of some network elements.

The operator network may include one or more of the following network elements: an authentication server function (Authentication Server Function, AUSF) network element, a network exposure function (network exposure function, NEF) network element, a policy control function (policy control function, PCF) network element, a unified data management (unified data management, UDM) network element, a unified data repository (Unified Data Repository, UDR), a network repository function (Network Repository Function, NRF) network element, an application function (application function, AF) network element, an access and mobility management function (access and mobility management function, AMF) network element, a session management function (session management function, SMF) network element, a radio access network (radio access network, RAN) device, a user plane function (user plane function, UPF) network element, a network slice selection function (Network Slice Selection Function, NSSF) network element (not shown in the figure), and the like. In the foregoing operator network, a network element or device other than the radio access network device may be referred to as a core network element or a core network device. It should be noted that, during actual application, AFs are classified into two types: one type belongs to the core network element, and the other type belongs to a third-party application server.

The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a wireless fidelity (wireless fidelity, Wi-Fi) system, or the like; or may be a module or unit that implements some functions of a base station, for example, may be a central unit (central unit, CU), or may be a distributed unit (distributed unit, DU). The radio access network device may be a macro base station, a micro base station or an indoor base station, a relay node or a donor node, or the like. A specific technology and a specific device form that are used by the radio access network device are not limited in embodiments of this application. In embodiments of this application, an example in which a base station is used as the radio access network device is used for description.

The terminal may also be referred to as a terminal device, user equipment (user equipment, UE), a mobile station, a mobile terminal, or the like. The terminal may be widely used in various scenarios such as device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, smart grid, smart furniture, smart office, a smart wearable device, smart transportation, and smart city. The terminal may be a mobile phone, a tablet computer, a computer having a wireless transceiver function, a wearable device, a vehicle, an unmanned aerial vehicle, a helicopter, an airplane, a ship, a robot, a robot arm, a smart home device, or the like. A specific technology and a specific device form used by the terminal are not limited in embodiments of this application.

The base station and the terminal may be located at fixed locations, or may be mobile. The base station and the terminal may be deployed on land, including an indoor or outdoor device, a handheld device, or a vehicle-mounted device, may be deployed on a water surface, or may be deployed on an airplane, a balloon, and a satellite in the air. Application scenarios of the base station and the terminal device are not limited in embodiments of this application.

The AMF network element performs functions such as mobility management and access authentication/authorization. In addition, the AMF network element is responsible for transmitting a user policy between a terminal and a PCF.

The SMF network element performs functions such as session management, execution of a control policy delivered by the PCF, UPF selection, and terminal internet protocol (internet protocol, IP) address allocation.

The UPF network element serves as an interface UPF connecting to the data network, and implements functions such as user plane data forwarding, charging statistics based on a session/flow level, and bandwidth throttling.

The UDM network element performs functions such as subscription data management and user access authorization.

The UDR performs functions of accessing subscription data, policy data, application data, and other types of data.

The NEF network element is configured to support capability and event exposure.

The AF network element transmits a requirement of an application side on a network side, for example, a quality of service (Quality of Service, QoS) requirement or user status event subscription. The AF may be a third-party functional entity, or may be an operator-deployed application service, for example, an IP multimedia subsystem (IP Multimedia Subsystem, IMS) voice call service.

The PCF network element is responsible for policy control functions such as session-level or service flow-level charging, QoS bandwidth guarantee and mobility management, and terminal policy decision.

The NRF network element may be configured to provide a network element discovery function, and provide, based on a request from another network element, network element information corresponding to a network element type. An NRF further provides a network element management service, for example, registration, update, and deregistration of a network element and subscription and push of a network element status.

The AUSF network element is responsible for authenticating a user, to determine whether the user or a device is allowed to access a network.

The NSSF network element is configured to select a network slice, perform user counting on the network slice, and the like.

The DN is a network outside the operator network. The operator network may access a plurality of DNs. A plurality of services may be deployed on the DN, and the DN may provide services such as a data service and/or a voice service for the terminal. For example, the DN is a private network of a smart factory, a sensor installed in a workshop of the smart factory may be the terminal, a control server of the sensor is deployed in the DN, and the control server may provide a service for the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be the terminal, and the mobile phone or the computer of the employee may access information, data resources, and the like on the internal office network of the company.

In FIG. 1(a), Nausf, Nnef, Npcf, Nudm, Naf, Namf, and Nsmf are service-based interfaces provided by the AUSF, NEF, PCF, UDM, AF, AMF, and SMF respectively, and are configured to invoke corresponding service-oriented operations. N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

FIG. 1(b) is a schematic diagram of a 5G network architecture based on a point-to-point interface. For descriptions of functions of network elements, refer to the descriptions of functions of corresponding network elements in FIG. 1(a). Details are not described again. A main difference between FIG. 1(b) and FIG. 1(a) lies in that interfaces between control plane network elements in FIG. 1(a) are service-based interfaces, and interfaces between control plane network elements in FIG. 1(b) are point-to-point interfaces.

In the architecture shown in FIG. 1(b), names and functions of the interfaces between the network elements are as follows:
(1) N1 represents an interface between the AMF and the terminal, and may be configured to transmit a QoS control rule and the like to the terminal.
(2) N2 represents an interface between the AMF and the RAN, and may be configured to transmit radio bearer control information and the like from a core network side to the RAN.
(3) N3 represents an interface between the RAN and the UPF, and is mainly configured to transmit uplink and downlink user plane data between the RAN and the UPF.
(4) N4 represents an interface between the SMF and the UPF, and may be configured to transmit information between a control plane and a user plane, including delivery of a forwarding rule, a QoS control rule, a traffic statistics rule, and the like from the control plane to the user plane, and reporting of user plane information.
(5) N5 represents an interface between the AF and the PCF, and may be configured to deliver an application service request and report a network event.
(6) N6 represents an interface between the UPF and the DN, and is configured to transmit uplink and downlink subscriber data flows between the UPF and the DN.
(7) N7 represents an interface between the PCF and the SMF, and may be configured to deliver a protocol data unit (protocol data unit, PDU) session granularity control policy and a service data flow granularity control policy.
(8) N8 represents an interface between the AMF and the UDM, and may be used by the AMF to obtain, from the UDM, subscription data and authentication data related to access and mobility management, and used by the AMF to register current mobility management related information of the terminal with the UDM.
(9) N9 represents a user plane interface between UPFs, and is configured to transmit uplink and downlink subscriber data flows between the UPFs.
(10) N10 represents an interface between the SMF and the UDM, and may be used by the SMF to obtain, from the UDM, subscription data related to session management, and used by the SMF to register current session related information of the terminal with the UDM.
(11) N11 represents an interface between the SMF and the AMF, and may be configured to transmit PDU session tunnel information between the RAN and the UPF, transmit a control message to be sent to the terminal, transmit radio resource control information to be sent to the RAN, and the like.
(12) N12 represents an interface between the AMF and the AUSF, and may be used by the AMF to initiate an authentication process to the AUSF, where an SUCI may be carried as a subscription identifier.
(13) N13 represents an interface between the UDM and the AUSF, and may be used by the AUSF to obtain a user authentication vector from the UDM, to perform an authentication process.
(14) N15 represents an interface between the PCF and the AMF, and may be configured to deliver a terminal policy and an access control-related policy.
(15) N35 represents an interface between the UDM and the UDR, and may be used by the UDM to obtain user subscription data information from the UDR.
(16) N36 represents an interface between the PCF and the UDR, and may be used by the PCF to obtain policy related subscription data and application data related information from the UDR.

It may be understood that the foregoing network elements or functions may be network elements in a hardware device, software functions running on dedicated hardware, or virtualized functions instantiated on a platform (for example, a cloud platform). Optionally, the foregoing network elements or the functions may be implemented by one device, may be implemented by a plurality of devices, or may be one functional module in one device. This is not specifically limited in embodiments of this application.

In a forwarding process of the conventional Ethernet, when a large quantity of data packets instantaneously arrive at a forwarding port, a high forwarding latency or a packet loss may be caused. Consequently, the conventional Ethernet cannot provide a service with high reliability and a low transmission latency, and cannot meet requirements in fields such as vehicle control and the industrial Internet. The institute of electrical and electronics engineers (institute of electrical and electronics engineers, IEEE) defines a related TSN standard for reliable transmission with a low latency, and the standard provides a reliable transmission service with a low latency based on layer 2 switching, to ensure reliability of latency-sensitive service data transmission and provide a predictable end-to-end transmission latency.

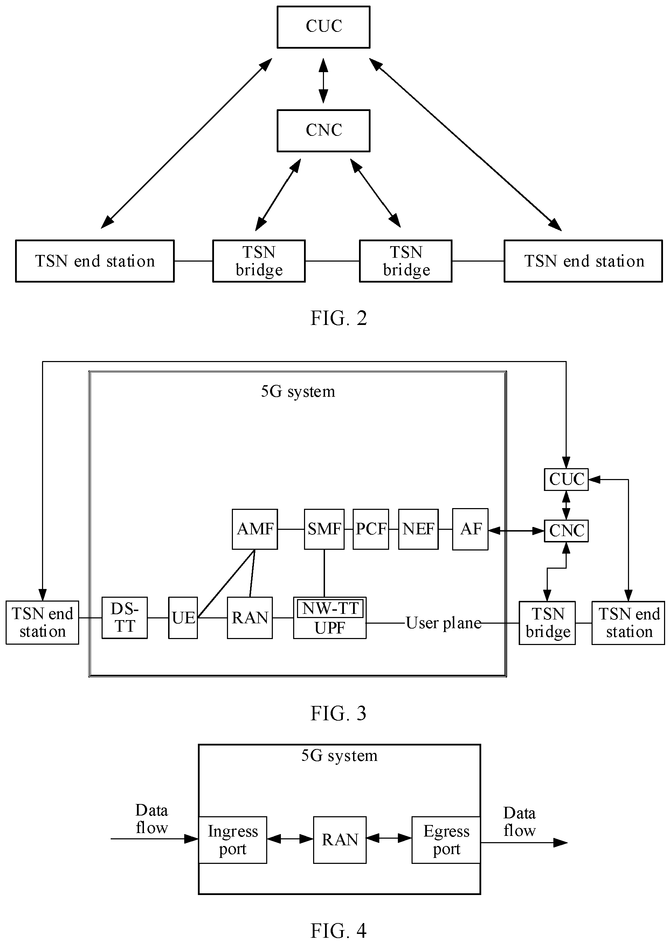

A fully centralized TSN system architecture for a TSN is defined in IEEE 802.1QCC. FIG. 2 is a schematic diagram of a fully centralized TSN system architecture, including a TSN end station (TSN End Station), a TSN bridge (TSN Bridge), a centralized user configuration (Centralized User Configuration, CUC) network element, and a centralized network configuration (Centralized Network Configuration, CNC) network element. The CUC network element and the CNC network element are respectively referred to as CUC and CNC for short in the following. Both the CUC and the CNC are control-plane network elements. Specifically:
(1) The TSN terminal may serve as a transmitting end or a receiving end of a data flow.
(2) The TSN switch reserves a resource for a data flow according to a definition of a TSN, and schedules and forwards the data flow.
(3) The CNC manages a topology of a TSN user plane and capability information of the TSN switch (for example, a sending delay of the TSN switch and an internal processing delay between ports of the TSN switch). The sending delay of the TSN switch is a period of time between a time point at which a TSN flow is sent from an egress port of the TSN switch and a time point at which the TSN flow arrives at an ingress port of a next-hop switching node. The internal processing delay between the ports of the TSN switch is a period of time between a time point at which a TSN flow enters from an ingress port of the current TSN switch and a time point at which the TSN flow is sent from an egress port of the TSN switch.
(4) The CNC creates a TSN flow forwarding rule based on a flow creation request provided by the CUC, to generate a forwarding path of the data flow, and generate scheduling policies on the TSN terminal and each TSN switch. The scheduling policies include ports (including an ingress port and an egress port) for receiving and sending a packet of a TSN flow (or a TSN service class (traffic class) obtained by aggregating a plurality of TSN flows), a receiving time window (optional) at the ingress port, a sending time window at the egress port, a sending periodicity, and the like. Then, the CNC delivers the generated scheduling policies to corresponding TSN switches. The scheduling policies on the TSN switches are determined by the CNC based on network topology information and capability information reported by the TSN switches.

After creating the TSN flow forwarding rule, the CNC may determine a flow forwarding path on the TSN switch by delivering a static filtering entry (Static filtering entry) to the TSN switch. Information about the static filtering entry includes a destination medium access control (medium access control, MAC) address of the TSN flow, an identifier of a receive port of the TSN flow on the TSN switch, and an identifier of a transmit port of the TSN flow on the TSN switch. Optionally, the information about the static filtering entry further includes a virtual local area network (Virtual Local Area Network, VLAN) identifier (ID).

It should be noted that, the foregoing representation form of the scheduling policy sent by the CNC to the TSN switch depends on a scheduling algorithm defined in the TSN system. A scheduling algorithm defined in IEEE802.1Qbv is used as an example. The CNC sends, to the TSN switch, a scheduling parameter defined in IEEE802.1Qbv, including gate control information of a port of the TSN switch, where the gate control information may include a time point at which a gate control operation periodicity of the port starts to be executed (that is, AdminBaseTime in IEEE802.1Qbv), a gate control state of a queue (that is, Gate State Value in IEEE802.1Qbv), and duration of the gate control state (that is, TimeIntervalValue in IEEE802.1Qbv). The TSN switch determines the sending time window at the egress port of the TSN switch and the sending periodicity based on the scheduling parameter, and optionally, may further determine the receiving time window at the ingress port.

(5) The CUC is configured to collect a flow creation request of the TSN terminal, for example, receive registration of a TSN transmitting terminal (Talker) and a TSN receiving terminal (Listener), receive flow information (such as a source address, a destination address, and a VLAN identifier), exchange configuration parameters, and the like; and after matching flow creation requests of the TSN transmitting terminal and the TSN receiving terminal, request the CNC to create a data flow and confirm a scheduling policy generated by the CNC.

FIG. 3 is a schematic diagram of a system architecture in which a 5G system interworks with a TSN. To be specific, the 5G architecture shown in FIG. 1(a) or FIG. 1(b) is combined with the TSN architecture shown in FIG. 2, and the 5G system and a TSN translator (TSN Translator) are used as a logical TSN switch (which is referred to as a 5G system or a 5G system switch) as a whole, to implement a function of the TSN switch in the TSN. The TSN translator converts and adapts a feature and information of the 5G network into information required by the TSN, and provides the information for the TSN system, or converts information required by the TSN system into a feature or information of the 5G network, and provides the information for the 5G system. FIG. 3 shows only some network elements (namely, the AMF, the SMF, the PCF, the RAN, the UE, the AF, and the UPF) in the 5G architecture.
(1) On a control plane, the 5G system exchanges information with a node in the TSN system by using the AF on the control plane. The exchanged information includes capability information of the 5G system, TSN configuration information (including time scheduling information of an ingress port and an egress port), and the like.

The AF provides the capability information of the 5G system for the CNC in the TSN system, and the CNC determines the TSN configuration information of the 5G system for a TSN service based on the capability information of the 5G system and capability information of another TSN switch. The AF provides, for the 5G system, the TSN configuration information that is determined by the CNC and that is for the 5G system.

The capability information of the 5G system includes an internal processing delay of the 5G system, a transmission delay on a LTE side of the 5G system, and a transmission delay on a UPF side of the 5G system. The internal processing delay of the 5G system includes residence duration on the UE side (that is, a processing and residence duration of a TSN packet in the UE and in the TSN translator on the UE side), residence duration on the UPF side (that is, a processing and residence duration of the TSN packet in the UPF and in the TSN translator on the UPF side), and a transmission delay between the UE and the UPF. The transmission delay between the UE and the UPF is represented by a packet delay budget (packet delay budget, PDB) of the TSN packet between the UE and the UPF.

(2) On a user plane, the UPF in the 5G system receives a downlink TSN flow from the TSN system or sends an uplink TSN flow to the TSN system through the TSN translator. The TSN translator may be integrated into the UPF or deployed independently of the UPF. The UPF-side TSN translator may also be referred to as a network-side TSN translator (network-side TSN Translator, NW-TT).

(3) On the user plane, the UE in the 5G system receives an uplink TSN flow from the TSN system or sends a downlink TSN flow to the TSN system through the TSN translator. The TSN translator may be integrated into the UE or deployed independently of the UE. The UE-side TSN translator may also be referred to as a device-side TSN translator (device-side TSN Translator, DS-TT).

FIG. 4 is a simplified schematic diagram of a system architecture in which a 5G system interworks with a TSN. A data flow is received from an ingress port of the 5G system, and is sent from an egress port of the 5G system after being processed in the 5G system. When the DS-TT and the UE are independently deployed, the ingress port is the DS-TT or a port on the DS-TT; and when the DS-TT is integrated into the UE, the ingress port is the UE or the DS-TT on the UE. When the NW-TT and the UPF are independently deployed, the egress port is the NW-TT or a port on the NW-TT; and when the NW-TT is integrated into the UPF, the egress port is the UPF or the NW-TT on the UPF.

In an example, a user plane network element in this application may be a network element having a function of the UPF shown in FIG. 3. The user plane network element may be integrated into a TSN translator, or the TSN translator is deployed independently of the user plane network element. For ease of description, an example in which the TSN translator is integrated into the user plane network element is used for description in this application. In addition, the user plane network element is referred to as a UPF in subsequent descriptions of this application. It should be noted that in future communication, the user plane network element may still be referred to as a UPF, or may have another name. This is not limited in this application. The following UPF in this application may be replaced with a user plane network element.

In an example, a session management network element in this application may be a network element having a function of the SMF shown in FIG. 3, FIG. 1(a), or FIG. 1(b). For ease of description, the session management network element is referred to as an SMF in subsequent descriptions of this application. It should be noted that in future communication, the session management network element may still be referred to as an SMF, or may have another name. This is not limited in this application. The following SMF in this application may be replaced with a session management network element.

In an example, a policy control network element in this application is a network element having a function of the PCF shown in FIG. 3, FIG. 1(a), or FIG. 1(b). For ease of description, the policy control network element is referred to as a PCF in subsequent descriptions of this application. It should be noted that, in future communication, the policy control network element may still be referred to as a PCF network element, or may have another name. This is not limited in this application. The following PCF in this application may be replaced with a policy control network element.

In an example, an application function network element in this application may be a network element having a function of the AF shown in FIG. 3, FIG. 1(a), or FIG. 1(b). For ease of description, the application function network element is referred to as an AF in subsequent descriptions of this application. It should be noted that, in future communication, the application function network element may still be referred to as an AF, or may have another name. This is not limited in this application. The following AF in this application may be replaced with an application function network element.

In an example, a network capability exposure network element in this application may be a network element having a function of the NEF shown in FIG. 3, FIG. 1(a), or FIG. 1(b). For ease of description, the network capability exposure network element is referred to as a NEF in subsequent descriptions of this application. It should be noted that in future communication, the network capability exposure network element may still be referred to as a NEF, or may have another name. This is not limited in this application. The following NEF in this application may be replaced with a network capability exposure network element.

In an example, a terminal in this application may be a device having a function of the UE shown in FIG. 3. The terminal may be integrated into a TSN translator, or the TSN translator is deployed independently of the terminal. For ease of description, an example in which the TSN translator is integrated into the terminal is used for description in this application. For ease of description, the terminal device is referred to as LTE in subsequent descriptions of this application.

In a solution of implementing deterministic transmission based on the 5G system, the AF sends a time sensitive communication (time sensitive communication, TSC) parameter to the SMF by using the NEF. The TSC parameter is used to describe a data flow feature of the TSN service. The TSC parameter may include at least one of the following: a 5G system delay (5GS delay), jitter (jitter), a time point at which burst traffic arrives at the UE and/or the UPF (burst arrival time at UE and/or UPF), a traffic burst size (burst size), a burst periodicity (burst periodicity), and the like. The 5G system delay is a delay between a time point at which a data packet arrives at an ingress port of the 5G system and a time point at which the data packet is sent from an egress port of the 5G system. The 5G system delay may also be referred to as internal processing duration of the 5G system or an internal processing delay of the 5G system. The 5G system delay includes an internal processing delay of the UE, an air interface delay between the UE and a base station, an internal processing delay of the base station, a transmission delay between the base station and the UPF, an internal processing delay of the UPF, and the like. Jitter refers to an error range of the 5G system delay. To be specific, the 5G system delay may fluctuate within a range due to reasons such as noise, link quality, and load. The time point at which the burst traffic arrives at the UE or the UPF is a time point at which a data flow of the TSN service arrives at the UE or the UPF. The traffic burst size is a size of a data flow arriving at the UE or the UPF. The burst periodicity is a periodicity in which a data flow of the TSN service arrives at the UE or the UPF.

After receiving the TSC parameter, the NEF calculates sending time windows of the data flow on the UE and UPF based on the TSC parameter. The sending time window of the data flow on the UE may be understood as a sending time window of the data flow on the DS-TT, and the sending time window of the data flow on the UPF may be understood as a sending time window of the data flow on the NW-TT.

For an uplink data flow, the NEF calculates one or more sending time windows of the uplink data flow on the UPF based on the time point at which the burst traffic arrives at the UE, the 5G system delay, the jitter, and the burst periodicity. After receiving the uplink data flow, the 5G system sends the uplink data flow to the UPF. The UPF buffers the uplink data flow, and then sends the uplink data flow to the outside in a sending time window corresponding to the uplink data flow.

For a downlink data flow, the NEF calculates one or more sending time windows of the downlink data flow on the UE based on the time point at which the burst traffic arrives at the UPF, the 5G system delay, the jitter, and the burst periodicity. After receiving the downlink data flow, the 5G system sends the downlink data flow to the LTE. The LTE buffers the downlink data flow, and then sends the downlink data flow to the outside in a sending time window corresponding to the downlink data flow.

After receiving the TSC parameter, for an uplink data flow, the SMF may calculate, based on the time point at which the burst traffic arrives at the UE and the internal processing delay of the UE, a time point at which the LTE sends the uplink data flow to the base station; and for a downlink data flow, the SMF may calculate, based on the time point at which the burst traffic arrives at the UPF, the internal processing delay of the UPF, and the transmission delay between the base station and the UPF, a time point at which the downlink data flow arrives at the base station. Then, the SMF may send, to the base station, the time point at which the UE sends the uplink data flow to the base station or the time point at which the downlink data flow arrives at the base station, to assist the base station in scheduling. For example, the SMF sends a time sensitive communication assistance information (time sensitive communication assistance information, TSCAI) parameter to the base station, where the TSCAI parameter carries the time point at which the LTE sends the uplink data flow to the base station and/or the time point at which the downlink data flow arrives at the base station.

The foregoing solution has the following problems:

In a first problem, when there are a plurality of applications, AFs corresponding to the plurality of applications provide TSC parameters for the 5G system, and then the 5G system calculates sending time windows for data flows of the applications. However, sending time windows of data flows of different applications may overlap, and this causes a scheduling conflict between the data flows of the plurality of applications on the UE or the UPF.

In a second problem, when a plurality of data flows arrive at the base station at a same time or at similar time points, but the base station does not have sufficient resources to schedule the plurality of data flows simultaneously, the base station cannot normally send service data flows.

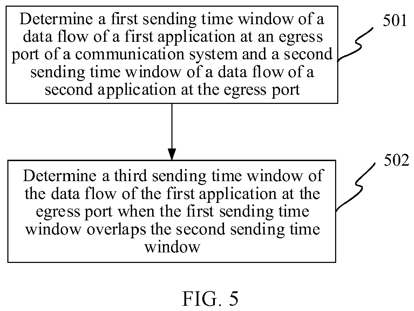

FIG. 5 shows a wireless communication method according to an embodiment of this application. The method may be used to resolve the first problem. According to the method, sending time windows of data flows of different applications on UE or a UPF may be adjusted, so that the sending time windows of the data flows of the different applications on the UE or the UPF do not overlap, to avoid a scheduling conflict between data flows of a plurality of applications on the UE or the UPF. Certainly, the method may also be used to resolve the second problem. Specifically, when the method is used to adjust the sending time windows of the data flows of the different applications on the LTE or the UPF, to enable the sending time windows of the data flows of the different applications on the UE or the UPF not to overlap, to some extent, there is a specific time interval between time points at which the data flows of the different applications arrive at a base station. This avoids a case in which the base station does not have sufficient resources to schedule the plurality of data flows simultaneously.

The following describes the method in detail by using an example in which the method is used to resolve the first problem.

The method may be performed by a control plane network element such as a PCF or a NEF in a 5G system, or may be performed by a chip used in the control plane network element, such as a chip of the PCF or a chip of the NEF.

The method includes the following steps.

Step 501: Determine a first sending time window of a data flow of a first application at an egress port of a communication system and a second sending time window of a data flow of a second application at the egress port, where the egress port corresponds to LTE or a UPF.

In this embodiment of this application, the communication system may be the 5G system described in FIG. 3 or FIG. 4, or may be a communication system that has a TSN interactive machine function in future communication, for example, a 6th generation (6th generation, 6G) system. For ease of description, the following uses an example in which the communication system is the 5G system for description.

The first application and the second application are different applications.

In an uplink direction, both the data flow of the first application and the data flow of the second application are uplink data flows. The first sending time window of the data flow of the first application at an egress port of the 5G system is a sending time window of the data flow of the first application on the UPF, at an egress port of the UPF, on an NW-TT, or at an egress port of the NW-TT. The first sending time window may be obtained through calculation based on a 5G system delay, jitter, and a time point at which burst traffic of the first application arrives at the UE. The second sending time window of the data flow of the second application at the egress port of the 5G system is a sending time window of the data flow of the second application on the UPF, at the egress port of the UPF, on the NW-TT, or at the egress port of the NW-TT. The second sending time window may be obtained through calculation based on the 5G system delay, the jitter, and a time point at which burst traffic of the second application arrives at the UE.

In a downlink direction, both the data flow of the first application and the data flow of the second application are downlink data flows. The first sending time window of the data flow of the first application at the egress port of the 5G system is a sending time window of the data flow of the first application on the LTE, at an egress port of the LTE, on a DS-TT, or at an egress port of the DS-TT. The first sending time window may be obtained through calculation based on a 5G system delay, jitter, and a time point at which burst traffic of the first application arrives at the UPF. The second sending time window of the data flow of the second application at the egress port of the 5G system is a sending time window of the data flow of the second application on the UE, at the egress port of the UE, on the DS-TT, or at the egress port of the DS-TT. The second sending time window may be obtained through calculation based on the 5G system delay, the jitter, and a time point at which burst traffic of the second application arrives at the UPF.

Step 502: Determine a third sending time window of the data flow of the first application at the egress port when the first sending time window overlaps the second sending time window, where the third sending time window is an adjusted sending time window of the data flow of the first application at the egress port, and the third sending time window does not overlap the second sending time window.

In another implementation, when the first sending time window overlaps the second sending time window, a sending time window of the data flow of the first application at the egress port may be redetermined, or a fourth sending time window of the data flow of the second application at the egress port is redetermined. The fourth sending time window is an adjusted sending time window of the data flow of the second application at the egress port, and the fourth sending time window does not overlap the first sending time window.

Certainly, during actual application, a sending time window of the data flow of the first application at the egress port and a sending time window of the data flow of the second application at the egress port may be redetermined simultaneously, so that an adjusted sending time window of the data flow of the first application at the egress port does not overlap an adjusted sending time window of the data flow of the second application at the egress port.

According to the foregoing solution, when sending time windows of different applications at the egress port of the communication system overlap, a sending time window of one or more of the applications may be redetermined, to enable the sending time windows of the different applications not to overlap. This avoids a scheduling conflict between data flows of the different applications on the UE or the UPF. Therefore, the 5G system can efficiently transmit data flows of a plurality of applications.

In an implementation, after step 502, the third sending time window may be further sent to an AF, and then the AF recalculates, based on the third sending time window and an internal processing delay of the 5G system, a time point at which the data flow of the first application arrives at an ingress port of the 5G system, that is, recalculates a time point at which the burst traffic arrives at the UE or the UPF. Then, the AF may resend a TSC parameter to the 5G system. The TSC parameter includes the recalculated time point at which the data flow of the first application arrives at the ingress port of the 5G system.

In another implementation, after step 502, a time point at which the data flow of the first application arrives at an ingress port of the 5G system may be recalculated based on the third sending time window and an internal processing delay of the 5G system, that is, a time point at which the burst traffic arrives at the UE or the UPF is recalculated. Then, the recalculated time point at which the data flow of the first application arrives at the ingress port in the 5G system is sent to an AF. Then, the AF may resend a TSC parameter to the 5G system. The TSC parameter includes the recalculated time point at which the data flow of the first application arrives at the ingress port of the 5G system. The TSC parameter may also be referred to as a first parameter.

In a possible implementation, the third sending time window may be further sent to the egress port of the 5G system, so that the egress port may send the data flow of the first application based on the third sending time window, to adjust the sending time window of the data flow of the first application at the egress port. This avoids a scheduling conflict between data flows of different applications at the egress port.

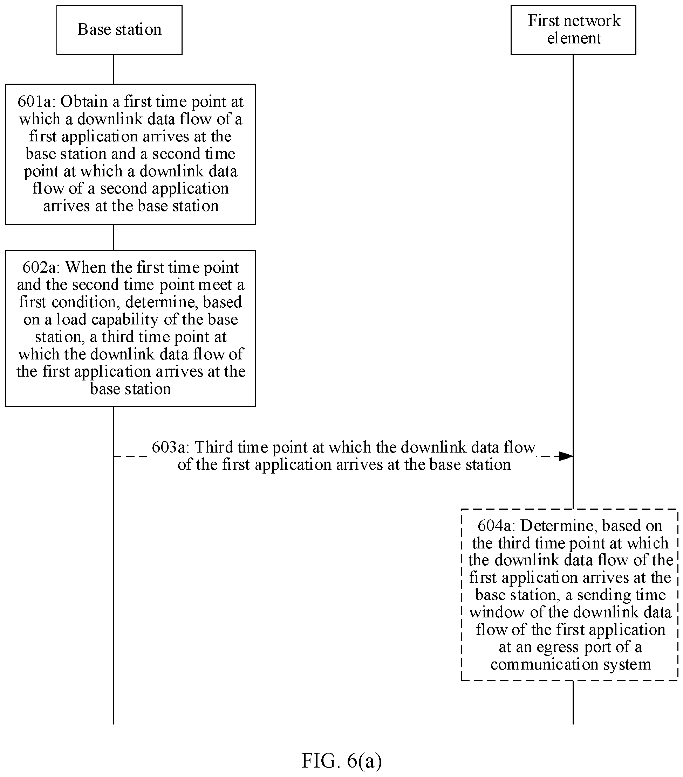

FIG. 6(a) shows a wireless communication method according to an embodiment of this application. The method may be used to resolve the second problem. The method is for a downlink data flow. Certainly, the method may also be used to resolve the foregoing first problem. Specifically, when a base station adjusts, based on a load capability, time points at which downlink data flows of different applications arrive at the base station, to enable the downlink data flows of the different applications not to arrive at the base station within a concentrated time range, to some extent, overlapping between sending time windows of the downlink data flows of the different applications on LTE may be avoided, to avoid a scheduling conflict between downlink data flows of a plurality of applications on the UE.

The following describes the method in detail by using an example in which the method is used to resolve the second problem.

The method includes the following steps.

Step 601a: A base station obtains a first time point at which a downlink data flow of a first application arrives at the base station and a second time point at which a downlink data flow of a second application arrives at the base station.

An SMF may send a TSCAI parameter to the base station, where the TSCAI parameter carries the first time point at which the downlink data flow of the first application arrives at the base station. According to the same method, the base station may obtain the second time point at which the downlink data flow of the second application arrives at the base station.

Step 602a: When the first time point and the second time point meet a first condition, the base station determines, based on a load capability of the base station, a third time point at which the downlink data flow of the first application arrives at the base station, where the third time is an adjusted time point at which the downlink data flow of the first application arrives at the base station.

The load capability includes but is not limited to one or more of a central processing unit capability, an air interface spectrum resource, an air interface bandwidth resource, and a memory size.

Optionally, the first condition may be that an interval between the first time point at which the downlink data flow of the first application arrives at the base station and the second time point at which the downlink data flow of the second application arrives at the base station is less than a first threshold.

For example, when the interval between the first time point at which the downlink data flow of the first application arrives at the base station and the second time point at which the downlink data flow of the second application arrives at the base station is less than the first threshold, the base station determines, based on the load capability of the base station, the third time point at which the downlink data flow of the first application arrives at the base station, where an interval between the third time point and the second time point is greater than or equal to the first threshold. The first threshold is a preset value, and may be a small value.

Alternatively, when the interval between the first time point at which the downlink data flow of the first application arrives at the base station and the second time point at which the downlink data flow of the second application arrives at the base station is less than the first threshold, the base station determines, based on the load capability of the base station, a fourth time point at which the downlink data flow of the second application arrives at the base station, where the fourth time point is an adjusted time point at which the downlink data flow of the second application arrives at the base station, and an interval between the fourth time point and the first time point is greater than or equal to the first threshold.

Certainly, an adjusted time point at which the downlink data flow of the first application arrives at the base station and an adjusted time point at which the downlink data flow of the second application arrives at the base station may be determined simultaneously, so that a time interval between the adjusted time point at which the downlink data flow of the first application arrives at the base station and the adjusted time point at which the downlink data flow of the second application arrives at the base station is greater than or equal to the first threshold. According to the foregoing solution, when a plurality of downlink data flows arrive at the base station at a same time point or at similar time points, but the base station does not have sufficient resources to schedule the plurality of downlink data flows simultaneously, the base station may redetermine, based on the load capability, a time point at which a downlink data flow of an application arrives at the base station, so that the downlink data flows of different applications do not arrive at the base station within a concentrated time range. This reduces load pressure of the base station and avoids a case in which the base station cannot normally send service data flows. Therefore, the 5G system can efficiently transmit the downlink data flows of the plurality of applications.

Further, after step 602a, the following step 603a and step 604a may be further performed.

Step 603a: The base station sends, to a first network element, the third time point at which the downlink data flow of the first application arrives at the base station. Correspondingly, the first network element receives the third time point at which the downlink data flow of the first application arrives at the base station.

The first network element herein may be an SMF or a PCF.

Step 604a: The first network element determines, based on the third time point at which the downlink data flow of the first application arrives at the base station, a sending time window of the downlink data flow of the first application at an egress port of a communication system.

The communication system may be the 5G system described in FIG. 3 or FIG. 4, or may be a communication system that has a TSN interactive machine function in future communication, for example, a 6G system. For ease of description, the following uses an example in which the communication system is the 5G system for description.

The first network element determines, based on the third time point at which the downlink data flow of the first application arrives at the base station and a transmission delay between the base station and UE, the sending time window of the downlink data flow of the first application at an egress port of the 5G system, that is, determines the sending time window of the downlink data flow of the first application on the LTE, at an egress port of the LTE, or on a DS-TT.

Further, the first network element may further send the sending time window of the downlink data flow of the first application at the egress port of the 5G system to the egress port, so that the egress port sends data based on the sending time window.

According to the foregoing solution, the base station may redetermine a time point at which the downlink data flow of the first application arrives at the base station, and then send an adjusted time point to the first network element, so that the first network element may recalculate, based on the adjusted time point, a sending time window of the downlink data flow of the first application at the egress port of the 5G system. In this way, downlink data flows of different applications may not arrive at the base station within a concentrated time range. This reduces load pressure of the base station and avoids a case in which the base station cannot normally send service data flows. Therefore, the communication system can efficiently transmit downlink data flows of a plurality of applications.

The following continues to provide descriptions in cases.

Case 1: The first network element is an SMF.

After obtaining, through calculation in step 602a, the sending time window of the downlink data flow of the first application at the egress port of the 5G system, the SMF may send the sending time window to a PCF or a NEF, so that the PCF or the NEF may determine, based on the sending time window and an internal processing delay of the 5G system, a time point at which the downlink data flow of the first application arrives at an ingress port of the 5G system.

Alternatively, after obtaining, through calculation in step 602a, the sending time window of the downlink data flow of the first application at the egress port of the 5G system, the SMF may further determine, based on the sending time window and an internal processing delay of the 5G system, a time point at which the downlink data flow of the first application arrives at an ingress port of the 5G system, and then the SMF sends, to a PCF or a NEF, the time point at which the downlink data flow of the first application arrives at the ingress port of the 5G system.

Alternatively, the SMF directly determines, based on the third time point at which the downlink data flow of the first application arrives at the base station, a time point at which the downlink data flow of the first application arrives at an ingress port of the 5G system. Then, the SMF sends, to a PCF or a NEF, the time point at which the downlink data flow of the first application arrives at the ingress port of the 5G system.

After obtaining the time point at which the downlink data flow of the first application arrives at the ingress port of the 5G system, the PCF or the NEF may reconfigure, for the 5G system, a time point at which the downlink data flow of the first application arrives at the ingress port of the 5G system. For example, the PCF or the NEF sends a TSC parameter to the SMF, where the TSC parameter includes the time point at which the downlink data flow of the first application arrives at the ingress port of the 5G system. The time point at which the downlink data flow of the first application arrives at the ingress port of the 5G system is the adjusted time point.

Case 2: The first network element is a NEF or a PCF.

After obtaining, through calculation in step 602a, the sending time window of the downlink data flow of the first application at the egress port of the 5G system, the NEF or the PCF may determine, based on the sending time window and an internal processing delay of the 5G system, a time point at which the downlink data flow of the first application arrives at an ingress port of the 5G system.

Alternatively, the NEF or the PCF directly determines, based on the third time point at which the downlink data flow of the first application arrives at the base station, a time point at which the downlink data flow of the first application arrives at an ingress port of the 5G system.

Subsequently, the NEF or the PCF may send, to an AF, the time point at which the downlink data flow of the first application arrives at the ingress port of the 5G system, so that the AF may resend a TSC parameter to the PCF or the NEF, where the TSC parameter includes the time point at which the downlink data flow of the first application arrives at the ingress port of the 5G system. In other words, the TSC parameter includes the adjusted time point at which the downlink data flow of the first application arrives at the ingress port of the 5G system.

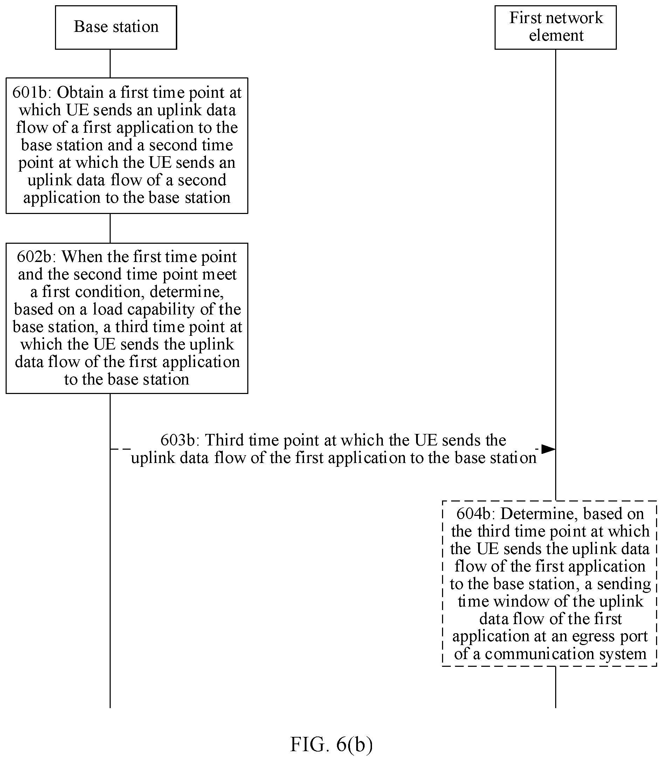

FIG. 6(b) shows a wireless communication method according to an embodiment of this application. The method may be used to resolve the second problem. The method is for an uplink data flow. Certainly, the method may also be used to resolve the foregoing first problem. Specifically, when a base station adjusts, based on a load capability, time points at which uplink data flows of different applications arrive at the base station, to enable the uplink data flows of the different applications not to arrive at the base station within a concentrated time range, to some extent, overlapping between sending time windows of the uplink data flows of the different applications on a UPF may be avoided, to avoid a scheduling conflict between uplink data flows of a plurality of applications on the UPF.

The following describes the method in detail by using an example in which the method is used to resolve the second problem.

The method includes the following steps.

Step 601b: A base station obtains a first time point at which UE sends an uplink data flow of a first application to the base station and a second time point at which the UE sends an uplink data flow of a second application to the base station.

An SMF may send a TSCAI parameter to the base station, where the TSCAI parameter carries the first time point at which the UE sends the uplink data flow of the first application to the base station. According to the same method, the base station may obtain the second time point at which the UE sends the uplink data flow of the second application to the base station.

The first time point at which the LTE sends the uplink data flow of the first application to the base station may alternatively be described as a time point at which the uplink data flow of the first application arrives at an egress port of the LTE, or may be described as a time point at which the uplink data flow of the first application is sent from the egress port of the UE.

Similarly, the second time point at which the UE sends the uplink data flow of the second application to the base station may alternatively be described as a time point at which the uplink data flow of the second application arrives at the egress port of the UE, or described as a time point at which the uplink data flow of the second application is sent from the egress port of the UE.

Step 602b: When the first time point and the second time point meet a first condition, the base station determines, based on a load capability of the base station, a third time point at which the UE sends the uplink data flow of the first application to the base station, where the third time point is an adjusted time point at which the uplink data flow of the first application arrives at the base station.

The load capability includes but is not limited to one or more of a central processing unit capability, an air interface spectrum resource, an air interface bandwidth resource, and a memory size.

Optionally, the first condition may be that an interval between the first time point at which the UE sends the uplink data flow of the first application to the base station and the second time point at which the LTE sends the uplink data flow of the second application to the base station is less than a first threshold.

For example, when the interval between the first time point at which the UE sends the uplink data flow of the first application to the base station and the second time point at which the UE sends the uplink data flow of the second application to the base station is less than the first threshold, the base station determines, based on the load capability of the base station, the third time point at which the LTE sends the uplink data flow of the first application to the base station, where an interval between the third time point and the second time point is greater than or equal to the first threshold. The first threshold is a preset value, and may be a small value.

Alternatively, when the interval between the first time point at which the UE sends the uplink data flow of the first application to the base station and the second time point at which the UE sends the uplink data flow of the second application to the base station is less than the first threshold, the base station determines, based on the load capability of the base station, a fourth time point at which the LTE sends the uplink data flow of the second application to the base station, where an interval between the fourth time point and the first time point is greater than or equal to the first threshold.

Certainly, an adjusted time point at which the uplink data flow of the first application arrives at the base station and an adjusted time point at which the uplink data flow of the second application arrives at the base station may be determined simultaneously, so that a time interval between the adjusted time point at which the uplink data flow of the first application arrives at the base station and the adjusted time point at which the uplink data flow of the second application arrives at the base station is greater than or equal to the first threshold.

According to the method, when the UE sends uplink data flows of a plurality of applications to the base station at a same time point or at similar time points, the uplink data flows of the plurality of applications arrive at the base station at a same time point or at similar time points. When the base station does not have sufficient resources to schedule the plurality of uplink data flows simultaneously, the base station may redetermine, based on the load capability, a time point at which the UE sends an uplink data flow of an application to the base station, so that the uplink data flows of the plurality of applications do not arrive at the base station at the same time point or at the similar time points. This reduces load pressure of the base station and avoids a case in which the base station cannot normally send service data flows. Therefore, the 5G system can efficiently transmit the uplink data flows of the plurality of applications.

Further, after step 602b, the following step 603b and step 604b may be further performed.

Step 603b: The base station sends, to a first network element, the third time point at which the UE sends the uplink data flow of the first application to the base station. Correspondingly, the first network element receives the third time point.

The first network element herein may be an SMF or a PCF.

Step 604b: The first network element determines, based on the third time point at which the LTE sends the uplink data flow of the first application to the base station, a sending time window of the uplink data flow of the first application at an egress port of a communication system.

The communication system may be the 5G system described in FIG. 3 or FIG. 4, or may be a communication system that has a TSN interactive machine function in future communication, for example, a 6G system. For ease of description, the following uses an example in which the communication system is the 5G system for description.

The first network element determines, based on the third time point at which the UE sends the uplink data flow of the first application to the base station, an internal processing delay of the UE, and an internal processing delay of the 5G system, the sending time window of the uplink data flow of the first application at an egress port of the 5G system, that is, determines a sending time window of the uplink data flow of the first application on the UPF, at an egress port of the UPF, or on an NW-TT.

Further, the first network element may further send the sending time window of the uplink data flow of the first application at the egress port of the 5G system to the egress port, so that the egress port sends data based on the sending time window.

According to the foregoing solution, the base station may redetermine a time point at which the UE sends the uplink data flow of the first application to the base station, and then send an adjusted time point to the first network element, so that the first network element may recalculate, based on the adjusted time point, a sending time window of the uplink data flow of the first application at the egress port of the 5G system. In this way, uplink data flows of different applications may not arrive at the base station within a concentrated time range. This reduces load pressure of the base station and avoids a case in which the base station cannot normally send service data flows. Therefore, the communication system can efficiently transmit uplink data flows of a plurality of applications.

The following continues to provide descriptions in cases.

Case 1: The first network element is an SMF.

After obtaining, through calculation in step 602b, the sending time window of the uplink data flow of the first application at the egress port of the 5G system, the SMF may send the sending time window to a PCF or a NEF, so that the PCF or the NEF may determine, based on the sending time window and the internal processing delay of the 5G system, a time point at which the uplink data flow of the first application arrives at an ingress port of the 5G system.

Alternatively, after obtaining, through calculation in step 602b, the sending time window of the uplink data flow of the first application at the egress port of the 5G system, the SMF may further determine, based on the sending time window and the internal processing delay of the 5G system, a time point at which the uplink data flow of the first application arrives at an ingress port of the 5G system, and then the SMF sends, to a PCF or a NEF, the time point at which the uplink data flow of the first application arrives at the ingress port of the 5G system.

Alternatively, the SMF directly determines, based on the third time point at which the UE sends the uplink data flow of the first application to the base station, a time point at which the uplink data flow of the first application arrives at an ingress port of the 5G system. Then, the SMF sends, to a PCF or a NEF, the time point at which the uplink data flow of the first application arrives at the ingress port of the 5G system.

After obtaining the time point at which the uplink data flow of the first application arrives at the ingress port of the 5G system, the PCF or the NEF may reconfigure, for the 5G system, a time point at which the uplink data flow of the first application arrives at the ingress port of the 5G system. For example, the PCF or the NEF sends a TSC parameter to the SMF, where the TSC parameter includes the time point at which the uplink data flow of the first application arrives at the ingress port of the 5G system. The time point at which the uplink data flow of the first application arrives at the ingress port of the 5G system is the adjusted time point.

Case 2: The first network element is a NEF or a PCF.

After obtaining, through calculation in step 602b, the sending time window of the uplink data flow of the first application at the egress port of the 5G system, the NEF or the PCF may determine, based on the sending time window and the internal processing delay of the 5G system, a time point at which the uplink data flow of the first application arrives at an ingress port of the 5G system.

Alternatively, the NEF or the PCF directly determines, based on the third time point at which the LTE sends the uplink data flow of the first application to the base station, a time point at which the uplink data flow of the first application arrives at an ingress port of the 5G system.

Subsequently, the NEF or the PCF may send, to an AF, the time point at which the uplink data flow of the first application arrives at the ingress port of the 5G system, so that the AF may resend a TSC parameter to the PCF or the NEF, where the TSC parameter includes the time point at which the uplink data flow of the first application arrives at the ingress port of the 5G system. In other words, the TSC parameter includes the adjusted time point at which the uplink data flow of the first application arrives at the ingress port of the 5G system.

It should be noted that the embodiment in FIG. 5 and the embodiment in FIG. 6(a) or FIG. 6(b) may be independently implemented, the embodiment in FIG. 5 and the embodiment in FIG. 6(a) may be implemented in combination, or the embodiment in FIG. 5 and the embodiment in FIG. 6(b) may be implemented in combination. This is not limited in this application.

It may be understood that, to implement functions in the foregoing embodiments, the first network element and the base station include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

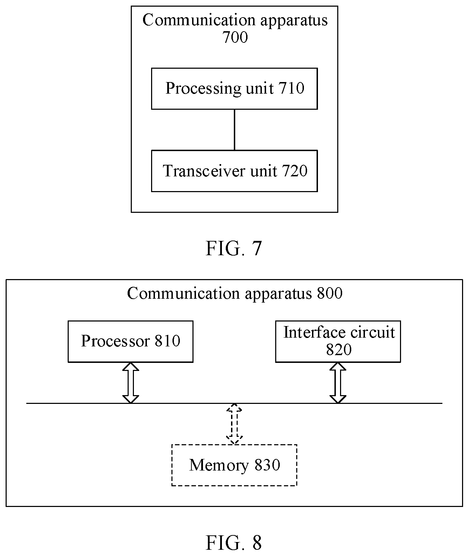

FIG. 7 and FIG. 8 are schematic diagrams of structures of possible communication apparatuses according to embodiments of this application. These communication apparatuses may be configured to implement a function of the session management network element, the policy control network element, the network exposure network element, or the radio access network device in the foregoing method embodiments, and therefore may also implement beneficial effects of the foregoing method embodiments. In embodiments of this application, the communication apparatus may be a session management network element or a module (such as a chip) used in the session management network element, a policy control network element or a module (such as a chip) used in the policy control network element, a network exposure network element or a module (such as a chip) used in the network exposure network element, or a radio access network device or a module (such as a chip) used in the radio access network device.

As shown in FIG. 7, a communication apparatus 700 includes a processing unit 710 and a transceiver unit 720. The communication apparatus 700 is configured to implement the steps in the method embodiment shown in FIG. 5, FIG. 6(a), or FIG. 6(b).

In a first embodiment, when the communication apparatus 700 is configured to implement the method embodiment shown in FIG. 5, the processing unit 710 is configured to: determine a first sending time window of a data flow of a first application at an egress port of a communication system and a second sending time window of a data flow of a second application at the egress port, where the egress port corresponds to a terminal or a user plane network element; and determine a third sending time window of the data flow of the first application at the egress port when the first sending time window overlaps the second sending time window, where the third sending time window is an adjusted sending time window of the data flow of the first application at the egress port, and the third sending time window does not overlap the second sending time window.

In a possible implementation, the transceiver unit 720 is further configured to send the third sending time window to an application function network element.

In a possible implementation, the processing unit 710 is further configured to determine, based on the third sending time window and an internal processing delay of the communication system, a time point at which the data flow of the first application arrives at an ingress port of the communication system; and the transceiver unit 720 is further configured to send, to the application function network element, the time point at which the data flow of the first application arrives at the ingress port of the communication system. The egress port corresponds to the terminal, and the ingress port corresponds to the user plane network element; or the egress port corresponds to the user plane network element, and the ingress port corresponds to the terminal.

In a possible implementation, the transceiver unit 720 is further configured to receive a first parameter from the application function network element, where the first parameter carries the time point at which the data flow of the first application arrives at the ingress port of the communication system.

In a possible implementation, the transceiver unit 720 is further configured to send the third sending time window to the egress port.

In a second embodiment, when the communication apparatus 700 is configured to implement the function of the base station (that is, the radio access network device) in the method embodiment shown in FIG. 6(a), the transceiver unit 720 is configured to obtain a first time point at which a downlink data flow of a first application arrives at the radio access network device and a second time point at which a downlink data flow of a second application arrives at the radio access network device; and the processing unit 710 is configured to: when the first time point and the second time point meet a first condition, determine, based on a load capability of the radio access network device, a third time point at which the downlink data flow of the first application arrives at the radio access network device, where the third time point is an adjusted time point at which the downlink data flow of the first application arrives at the radio access network device.

In a possible implementation, the processing unit 710 is specifically configured to: when an interval between the first time point and the second time point is less than a first threshold, determine, based on the load capability of the radio access network device, the third time point at which the downlink data flow of the first application arrives at the radio access network device, where an interval between the third time point and the second time point is greater than or equal to the first threshold.

In a possible implementation, the transceiver unit 720 is further configured to send the third time point to a session management network element.

In a possible implementation, the load capability includes one or more of a central processing unit capability, an air interface spectrum resource, an air interface bandwidth resource, and a memory size.

In a third embodiment, when the communication apparatus 700 is configured to implement the function of the first network element in the method embodiment shown in FIG. 6(a), the transceiver unit 720 receives, from the radio access network device, a third time point at which a downlink data flow of a first application arrives at the radio access network device, and the processing unit 710 is configured to determine, based on the third time point, a sending time window of the downlink data flow of the first application at an egress port of a communication system, where an ingress port of the communication system corresponds to a user plane network element, and the egress port corresponds to a terminal.

In a possible implementation, the first network element is a session management network element, and the transceiver unit 720 is further configured to send the sending time window to a policy control network element or a network exposure network element.

In a possible implementation, the first network element is a session management network element, a network exposure network element, or a policy control network element; the processing unit 710 is configured to determine, based on the sending time window and an internal processing delay of the communication system, a time point at which the downlink data flow of the first application arrives at the ingress port of the communication system; and the transceiver unit 720 is further configured to send, to an application function network element, the time point at which the downlink data flow of the first application arrives at the ingress port of the communication system.

In a possible implementation, the first network element is a network exposure network element or a policy control network element, and the transceiver unit 720 is further configured to send, to a session management network element, the time point at which the downlink data flow of the first application arrives at the ingress port of the communication system.

In a possible implementation, the transceiver unit 720 is further configured to send the sending time window to the egress port.

In a fourth embodiment, when the communication apparatus 700 is configured to implement the function of the base station (that is, the radio access network device) in the method embodiment shown in FIG. 6(b), the transceiver unit 720 is configured to obtain a first time point at which a terminal sends an uplink data flow of a first application to the radio access network device, and a second time point at which the terminal sends an uplink data flow of a second application to the radio access network device. The processing unit 710 is configured to: when the first time point and the second time point meet a first condition, determine, based on a load capability of the radio access network device, a third time point at which the terminal sends the uplink data flow of the first application to the radio access network device, where the third time point is an adjusted time point at which the uplink data flow of the first application arrives at the radio access network device.

In a possible implementation, the processing unit 710 is configured to: when an interval between the first time point and the second time point is less than a first threshold, determine, based on the load capability of the radio access network device, the third time point at which the terminal sends the uplink data flow of the first application to the radio access network device, where an interval between the third time point and the second time point is greater than or equal to the first threshold.

In a possible implementation, the transceiver unit 720 is configured to send the third time point to a session management network element.

In a possible implementation, the load capability includes one or more of a central processing unit capability, an air interface spectrum resource, an air interface bandwidth resource, and a memory size.

In a fifth embodiment, when the communication apparatus 700 is configured to implement the function of the first network element in the method embodiment shown in FIG. 6(b), the transceiver unit 720 is configured to receive, from the radio access network device, a third time point at which a terminal sends an uplink data flow of a first application to the radio access network device, and the processing unit 710 is configured to determine, based on the third time point, a sending time window of the uplink data flow of the first application at an egress port of a communication system, where an ingress port of the communication system corresponds to the terminal, and the egress port corresponds to a user plane network element.

In a possible implementation, the first network element is a session management network element, and the transceiver unit 720 is configured to send the sending time window to a policy control network element or a network exposure network element.

In a possible implementation, the first network element is a session management network element, a network exposure network element, or a policy control network element; the processing unit 710 is configured to determine, based on the sending time window and an internal processing delay of the communication system, a time point at which the uplink data flow of the first application arrives at the ingress port of the communication system; and the transceiver unit 720 is configured to send, to an application function network element, the time point at which the uplink data flow of the first application arrives at the ingress port of the communication system.

In a possible implementation, the first network element is a network exposure network element or a policy control network element, and the transceiver unit 720 is configured to send, to a session management network element, the time point at which the uplink data flow of the first application arrives at the ingress port of the communication system.

In a possible implementation, the transceiver unit 720 is configured to send the sending time window to the egress port.

In a sixth embodiment, when the communication apparatus 700 is configured to implement the function of the first network element in the method embodiment shown in FIG. 6(a), the transceiver unit 720 is configured to receive, from the radio access network device, a third time point at which a downlink data flow of a first application arrives at the radio access network device, and the processing unit 710 is configured to determine, based on the third time point, a time point at which the downlink data flow of the first application arrives at an ingress port of a communication system, where the ingress port corresponds to a user plane network element, and an egress port corresponds to a terminal.

In a possible implementation, the first network element is a session management network element, and the transceiver unit 720 sends, to a policy control network element or a network exposure network element, the time point at which the downlink data flow of the first application arrives at the ingress port of the communication system.

In a possible implementation, the first network element is a network exposure network element or a policy control network element, and the transceiver unit 720 sends, to an application function network element and/or a session management network element, the time point at which the downlink data flow of the first application arrives at the ingress port of the communication system.

In a seventh embodiment, when the communication apparatus 700 is configured to implement the function of the first network element in the method embodiment shown in FIG. 6(b), the transceiver unit 720 is configured to receive, from the radio access network device, a third time point at which a terminal sends an uplink data flow of a first application to the radio access network device, and the processing unit 710 is configured to determine, based on the third time point, a time point at which the uplink data flow of the first application arrives at an ingress port of a communication system, where the ingress port corresponds to the terminal, and an egress port corresponds to a user plane network element.

In a possible implementation, the first network element is a session management network element, and the transceiver unit 720 sends, to a policy control network element or a network exposure network element, the time point at which the uplink data flow of the first application arrives at the ingress port of the communication system.

In a possible implementation, the first network element is a network exposure network element or a policy control network element, and the transceiver unit 720 sends, to an application function network element and/or a session management network element, the time point at which the uplink data flow of the first application arrives at the ingress port of the communication system.

For more detailed descriptions of the processing unit 710 and the transceiver unit 720, directly refer to related descriptions in the method embodiments shown in FIG. 5, FIG. 6(a), or FIG. 6(b). Details are not described herein again.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions to be executed by the processor 810, store input data required for running the instructions by the processor 810, or store data generated after the processor 810 runs the instructions.

When the communication apparatus 800 is configured to implement the method embodiments shown in FIG. 5, FIG. 6(a), or FIG. 6(b), the processor 810 is configured to implement a function of the processing unit 710, and the interface circuit 820 is configured to implement a function of the transceiver unit 720.

It can be understood that the processor in this embodiment of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, the storage medium is coupled to the processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may alternatively exist in the base station or the terminal as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or the functions in embodiments of this application are executed. The computer may be a general-purpose computer, a dedicated computer, a computer network, a base station, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid state disk. The computer-readable storage medium may be a volatile or nonvolatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A wireless communication method, applied to a radio access network device and comprising:
obtaining a first time point at which a downlink data flow of a first application arrives at the radio access network device and a second time point at which a downlink data flow of a second application arrives at the radio access network device; and
when the first time point and the second time point meet a first condition, determining, based on a load capability of the radio access network device, a third time point at which the downlink data flow of the first application arrives at the radio access network device, wherein the third time point is an adjusted time point at which the downlink data flow of the first application arrives at the radio access network device.

2. The method according to claim 1, wherein when the first time point and the second time point meet the first condition, the determining, based on a load capability of the radio access network device, a third time point at which the downlink data flow of the first application arrives at the radio access network device comprises:
when an interval between the first time point and the second time point is less than a first threshold, determining, based on the load capability of the radio access network device, the third time point at which the downlink data flow of the first application arrives at the radio access network device, wherein an interval between the third time point and the second time point is greater than or equal to the first threshold.

3. The method according to claim 1 or 2, further comprising:
sending the third time point to a session management network element.

4. The method according to any one of claims 1 to 3, wherein the load capability comprises one or more of a central processing unit capability, an air interface spectrum resource, an air interface bandwidth resource, and a memory size.

5. A wireless communication method, wherein the method is applied to a first network element and comprises:
receiving, from a radio access network device, a third time point at which a downlink data flow of a first application arrives at the radio access network device; and
determining, based on the third time point, a sending time window of the downlink data flow of the first application at an egress port of a communication system, wherein an ingress port of the communication system corresponds to a user plane network element, and the egress port corresponds to a terminal.

6. The method according to claim 5, wherein the first network element is a session management network element, and the method further comprises:
sending the sending time window to a policy control network element or a network exposure network element.

7. The method according to claim 5, wherein the method further comprises:
determining, based on the sending time window and an internal processing delay of the communication system, a time point at which the downlink data flow of the first application arrives at the ingress port of the communication system; and
sending, to an application function network element, the time point at which the downlink data flow of the first application arrives at the ingress port of the communication system.

8. The method according to claim 7, wherein the first network element is a policy control network element or a network exposure network element, and the method further comprises:
sending, to a session management network element, the time point at which the downlink data flow of the first application arrives at the ingress port of the communication system.

9. The method according to any one of claims 5 to 8, further comprising:
sending the sending time window to the egress port.

10. A wireless communication method, applied to a radio access network device and comprising:
obtaining a first time point at which a terminal sends an uplink data flow of a first application to the radio access network device and a second time point at which the terminal sends an uplink data flow of a second application to the radio access network device; and
when the first time point and the second time point meet a first condition, determining, based on a load capability of the radio access network device, a third time point at which the terminal sends the uplink data flow of the first application to the radio access network device, wherein the third time point is an adjusted time point at which the uplink data flow of the first application arrives at the radio access network device.

11. The method according to claim 10, wherein when the first time point and the second time point meet the first condition, the determining, based on a load capability of the radio access network device, a third time point at which the terminal sends the uplink data flow of the first application to the radio access network device comprises:
when an interval between the first time point and the second time point is less than a first threshold, determining, based on the load capability of the radio access network device, the third time point at which the terminal sends the uplink data flow of the first application to the radio access network device, wherein an interval between the third time point and the second time point is greater than or equal to the first threshold.

12. The method according to claim 10 or 11, further comprising:
sending the third time point to a session management network element.

13. The method according to any one of claims 10 to 12, wherein the load capability comprises one or more of a central processing unit capability, an air interface spectrum resource, an air interface bandwidth resource, and a memory size.

14. A wireless communication method, wherein the method is applied to a first network element and comprises:
receiving, from a radio access network device, a third time point at which a terminal sends an uplink data flow of a first application to the radio access network device; and
determining, based on the third time point, a sending time window of the uplink data flow of the first application at an egress port of a communication system, wherein an ingress port of the communication system corresponds to the terminal, and the egress port corresponds to a user plane network element.

15. The method according to claim 14, wherein the first network element is a session management network element, and the method further comprises:
sending the sending time window to a policy control network element or a network exposure network element.

16. The method according to claim 14, wherein the method further comprises:
determining, based on the sending time window and an internal processing delay of the communication system, a time point at which the uplink data flow of the first application arrives at the ingress port of the communication system; and
sending, to an application function network element, the time point at which the uplink data flow of the first application arrives at the ingress port of the communication system.

17. The method according to claim 16, wherein the first network element is a policy control network element or a network exposure network element, and the method further comprises:
sending, to a session management network element, the time point at which the uplink data flow of the first application arrives at the ingress port of the communication system.

18. The method according to any one of claims 14 to 17, further comprising:
sending the sending time window to the egress port.

19. A communication apparatus, comprising a module configured to perform the method according to any one of claims 1 to 4, a module configured to perform the method according to any one of claims 5 to 9, a module configured to perform the method according to any one of claims 10 to 13, or a module configured to perform the method according to any one of claims 14 to 18.

20. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement, through a logical circuit or by executing code instructions, the method according to any one of claims 1 to 4, the method according to any one of claims 5 to 9, the method according to any one of claims 10 to 13, or the method according to any one of claims 14 to 18.

21. A communication system, comprising a communication apparatus configured to perform the method according to any one of claims 1 to 4 and a communication apparatus configured to perform the method according to any one of claims 5 to 9.

22. A communication system, comprising a communication apparatus configured to perform the method according to any one of claims 10 to 13 and a communication apparatus configured to perform the method according to any one of claims 14 to 18.

23. A computer-readable storage medium, wherein the storage medium stores a computer program or instructions; and when the computer program or the instructions is/are executed by a processor, the method according to any one of claims 1 to 18 is implemented.

24. A computer program product, comprising a computer program, wherein when the computer program is executed by a communication apparatus, the method according to any one of claims 1 to 18 is implemented.
